# EUROPEAN PATENT SPECIFICATION

(11) **EP 3 584 494 B1**
(45) Date of publication and mention of the grant of the patent: **28.07.2021**
(21) Application number: 19721514.8
(22) Date of filing: 09.01.2019
(51) Int. Cl.: F21S 8/00, F21V 15/01, F21V 29/76, F21S 8/06, A01G 7/04, F21V 7/00, F21Y 103/10, F21Y 115/10

(54) **HEAT SINK AND PLANT LAMP**
KÜHLKÖRPER UND PFLANZENLAMPE
DISSIPATEUR THERMIQUE ET LAMPE POUR PLANTES

(30) Priority: 28.04.2018 CN 201810404793
(43) Date of publication of application: 25.12.2019
(73) Proprietor: Fujian Sanan Sino-Science Photobiotech Co., Ltd., Quanzhou, Fujian 362400 (CN)
(72) Inventor: WU, Chanjuan, Quanzhou City, Fujian 362411 (CN); ZENG, Liang, Quanzhou City, Fujian 362411 (CN); LIN, Pingqiu, Quanzhou City, Fujian 362411 (CN); LI, Nana, Quanzhou City, Fujian 362411 (CN)
(74) Representative: Kayahan, Senem
(86) International application number: PCT/CN2019/070926
(87) International publication number: WO 2019/205743

(56) References cited:
- CN-A- 103 925 580
- CN-A- 108 591 883
- CN-A- 108 626 623
- CN-B- 103 423 647
- CN-U- 201 437 975
- CN-U- 203 364 074
- CN-U- 204 176 603
- CN-U- 204 593 304
- CN-U- 205 026 622
- CN-U- 205 155 751
- CN-U- 206 973 503
- KR-A- 20120 021 050
- US-A1- 2016 273 833

## Description

### Technical Field

The present invention relates to the field of heat radiation, and particularly to a radiator and a plant illumination lamp containing the radiator.

### Background

The plant illumination lamp, as the name implies, is a luminaire used for plants. The plant illumination lamp simulates sunlight based on the principle that plants need sunlight for photosynthesis, and provides supplementary lighting or completely replaces the sunlight for plants. Accordingly, the light source of the plant illumination lamp has a relatively larger illumination, which is several times of the illumination of the ordinary desk lamp and has a value up to several thousands. Thus, a single lamp of the plant illumination lamp has a very high power, and there is a high requirement for the heat radiation performance of the lamp.

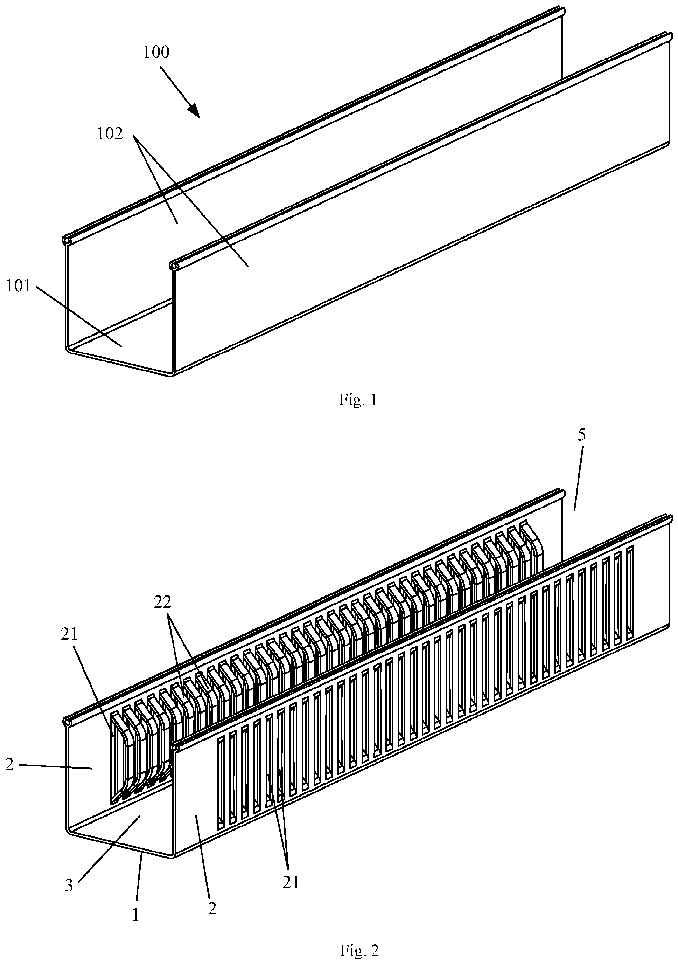

At present, the structure of the radiator provided in the plant illumination lamp is shown in Fig. 1. The radiator 100 has a substantially U-shaped cross section, and the radiator 100 includes a heat-radiating baseplate 101 extending horizontally, heat-radiating side plates 102 configured at both ends of the heat-radiating baseplate 101 in the width direction and extending vertically. The heat-radiating baseplate 101 is connected to the lamp housing of the plant illumination lamp to perform the heat conduction, and heat is radiated through the heat-radiating baseplate 101 and the heat-radiating side plates 102.

Further, the amount of heat exchanged by the radiator is Q=h^{∗}A^{∗}ΔT, where h is a heat exchange coefficient (usually ranges 4-20), A is the total area of the radiator involving in the heat exchange, and ΔT is the temperature difference between the heat source and the medium. In the radiator having the above structure, the total area A is increased with the configuration of the heat-radiating side plates 102. However, in the radiator having the above structure, the convection efficiency of the hot and cold air is very poor, and the effective heat radiation area is small, so that the heat exchange coefficient h is small. In the most cases, the heat exchange coefficient h is equal to 4 or slightly greater than 4. Therefore, the design of the radiator available now overly focuses on the total area A involving in the heat exchange while ignoring the improvement of the value of the heat exchange coefficient h. As a result, the heat radiation performance of the radiator is not the optimal, and the heat radiation requirements of the plant illumination lamp cannot be fully satisfied.

Following documents are provided as prior art references:
D1: CN 205155751 U (MIANYANG JINGLI LIGHTING TECH CO LTD), 13 April 2016.
D2: CN 103925580 A (RICHFUL SOLAR ENERGY TECHNOLOGY CO LTD), 16 July 2014.
D3: CN 103423647 B (HUNAN JIGUANG TECHNOLOGY CO LTD), 12 August 2015.
D4: CN 203364074 U (GUANGZHOU ZHONGHENG OPTOELECTRONICS TECHNOLOGY CO LTD), 25 December 2013.
D5: CN 206973503 U (SICHUAN JINGLI LIGHTING TECH CO LTD), 6 February 2018.

### Summary

In view of the above-described drawbacks of the prior art, the objective of the present invention is to provide a radiator capable of greatly increasing the value of the heat exchange coefficient h and the effective heat radiation area.

To achieve the above objective, the present invention provides a radiator, including a heat-radiating baseplate configured for fixing a heat source, and heat-radiating side plates connected to the heat-radiating baseplate. The heat-radiating side plates are provided with a plurality of heat-exchanging through grooves running through the heat-radiating side plates. When the radiator is used for a lamp, the heat-radiating baseplate is integrally provided with two reflectors arranged symmetrically at the left and right on the heat-radiating baseplate and the two reflectors both extend forward and backward; and the heat-radiating baseplate and the two reflectors constitute a lamp housing of the lamp and form a light source cavity for the lamp; an inner surface of each of the two reflectors is provided with a fixing slot configured to fix a lamp shade.

Further, the heat-radiating side plates are arranged on two sides of the heat-radiating baseplate; and the heat-radiating side plates are provided with a plurality of heat-radiating fins.

Further, the heat-radiating fins are integrally formed on the heat-radiating side plates by a punching method. After the heat-radiating side plates are punched, torn portions caused by punching and through-groove portions in a one-to-one correspondence with the torn portions are formed on the heat-radiating side plates. The torn portions form the heat-radiating fins, and the through-groove portions form the heat-exchanging through grooves.

Further, the heat-radiating fins may protrude from the heat-radiating side plates, and the heat-exchanging through grooves may be formed between the heat-radiating side plates and the heat-radiating fins.

Further, in the plurality of heat-radiating fins, a part of the heat-radiating fins may protrude inwardly from the heat-radiating side plates, and another part of the heat-radiating fins may protrude outwardly from the heat-radiating side plates.

Further, the heat-radiating fins each may include a fin bottom located at a middle of the heat-radiating fin and extending straightly, and a fin slanted plate portion extending obliquely from both ends of the fin bottom. One end of the fin slanted plate portion away from the fin bottom may be connected to the heat-radiating side plates. The fin bottom may be in a flat plate shape or an arc plate shape.

Further, the heat-radiating side plates may be integrally connected to the heat-radiating baseplate, and the radiator may be an extruded aluminum profile or a bent plate.

The present application further provides a plant illumination lamp which includes a lamp housing having a light source cavity, a light source mounted in the lamp housing and located in the light source cavity, and the radiator as described above. The radiator is mounted at an upper end of the lamp housing.

Further, the lamp housing and the radiator may form an integral structure. The lamp housing and the radiator may share the heat-radiating baseplate; and the light source may be mounted on the heat-radiating baseplate.

As described above, according to the present invention, the radiator and the plant illumination lamp have the following advantages.

In the present application, the heat-exchanging through grooves form a heat exchange channel for the internal-and-external temperature difference of the radiator, i.e., form a heat potential difference. As a result, the cold air outside the radiator would pass through the heat-exchanging through grooves on the heat-radiating side plates under the influence of the heat potential difference and then flow out through a hot air chamber and an air outlet mounted at an upper end of the hot air chamber after exchanging heat with the through grooves on the heat-radiating side plates, so as to form a stronger natural air convection. Therefore, the value of the heat exchange coefficient h of the radiator at the position near the heat-exchanging through grooves is improved by 4-6 times higher than that of the radiator without heat-exchanging through grooves. Moreover, the heat-exchanging through grooves increase the effective heat radiation area of the radiator during the processing, thereby greatly improving the heat radiation capability of the radiator, so that the heat radiation requirements of the plant illumination lamp can be satisfied.

### Brief Description of the Drawings

Fig. 1 is a structural schematic diagram of a radiator in the prior art.
Fig. 2 is a structural schematic diagram of a radiator in the present invention.
Fig. 3 is a partially enlarged view of Fig. 2.
Fig. 4 is a cross-sectional view of the radiator of Fig. 2 at a position of the heat-exchanging through groove.
Fig. 5 is a structural schematic diagram of Embodiment 1 of the plant illumination lamp of the present application.
Fig. 6 is a structural schematic diagram of Embodiment 2 of a plant illumination lamp of the present application.
Fig. 7 is a cross-sectional view of a plant illumination lamp of the present application at a position of the heat-exchanging through groove of a radiator.
Figs. 8 -10 are schematic diagrams showing airflow of a radiator at different viewing angles.
Fig. 11 is a diagram showing the comparison of heat exchange coefficient and temperature of a radiator of the present application.
Fig. 12 is a diagram showing the comparison of heat exchange coefficient and temperature of a radiator of the prior art.

### Description of the reference designators of the components

1. heat-radiating baseplate;
2. heat-radiating side plate;
21. heat-exchanging through groove
22. heat-radiating fin
221. fin bottom
222. fin slanted plate portion
23. mounting groove
3. hot air chamber
4. inner cavity
5. air outlet
6. reflector
61. fixing slot
7. light source cavity
8. light source
9. lampshade
10. end cover
11. hook
12. lifting rope
13. beam
14. threaded hole

### Detailed Description of the Embodiments

The implementations of the present invention are described hereinafter through specific embodiments. Those skilled in the art can readily learn other advantages and functions of the present invention from the disclosure in the specification.

It should be noted that the structure, proportion, size, etc. depicted in the drawings of the specification are merely intended to match the contents disclosed in the specification for person familiar with this technology to understand and read, rather than to limit the implementation requirements of the present invention, and therefore have no technical significance. Any modifications of the structure, variations of the proportional relationship, or adjustments of the size not affecting the desired function and purpose of the present invention shall be considered as falling within the scope of the technical contents disclosed by the present invention. Meanwhile, the terms such as "upper", "lower", "left", "right", "middle", "one", etc. recited in the specification are merely intended to create clear description rather than limit implementable scope of the present invention. Variations or adjustments to the relative relationship, without substantial variation of the technical contents, should also be considered as falling within the implementable scope of the present invention.

For the convenience of description, in the following embodiments, the width direction of the heat-radiating baseplate 1 in the radiator is defined as the left-right direction, the length direction of the heat-radiating baseplate 1 is defined as the front-rear direction, and the thickness direction of the heat-radiating baseplate 1 is defined as the up-down direction. Moreover, the left-right direction, the front-rear direction, and the up-down direction also refer to the width direction, the length direction, and the height direction of the radiator, respectively.

As shown in Figs. 2-4, the present application provides a radiator which includes the heat-radiating baseplate 1 configured for fixing a heat source, and heat-radiating side plates 2 connected to the heat-radiating baseplate 1. The heat-radiating side plates 2 are provided with a plurality of heat-exchanging through grooves 21 running through the heat-radiating side plates 2. Preferably, the heat-radiating side plates 2 are arranged on two sides of the heat-radiating baseplate 1, particularly on the edges of the heat-radiating baseplate 1. The heat-radiating side plates 2 may extend straightly along a plane where the heat-radiating baseplate 1 is located. In this case, the heat-radiating side plates 2 and the heat-radiating baseplate 1 come from one flat plate. Or, the heat-radiating side plates 2 may extend in a direction perpendicular to the heat-radiating baseplate 1. In the radiator shown in Figs. 2-4, the heat-radiating side plates 2 are arranged at left and right ends of the heat-radiating baseplate 1 along the width direction of the heat-radiating baseplate 1. A hot air chamber is formed between the heat-radiating baseplate 1 and the heat-radiating side plates 2. An air outlet 5 located at an upper end of the hot air chamber 3 is formed between the upper ends of the two heat-radiating side plates 2. The heat-radiating baseplate 1 extends forward and backward in a horizontal direction and is a transverse plate. The heat-radiating side plates 2 extend forward and backward in a vertical direction and are vertical plates. Specifically, a plurality of heat-exchanging through grooves 21 run through the heat-radiating side plates 2 between the left and right sides along the width direction of the heat-radiating baseplate 1, so that each of the heat-exchanging through grooves 21 communicates with the outside of the radiator and the hot air chamber 3. The heat-exchanging through grooves 21, the hot air chamber 3, and the air outlet 5 are sequentially interconnected to each other to form air convection channels of the radiator. In addition, the heat-exchanging through grooves 21 are longitudinal elongated grooves extending upward and downward, and the plurality of heat-exchanging through grooves 21 are equidistantly arranged forward and backward along the length direction of the heat-radiating side plates 2.

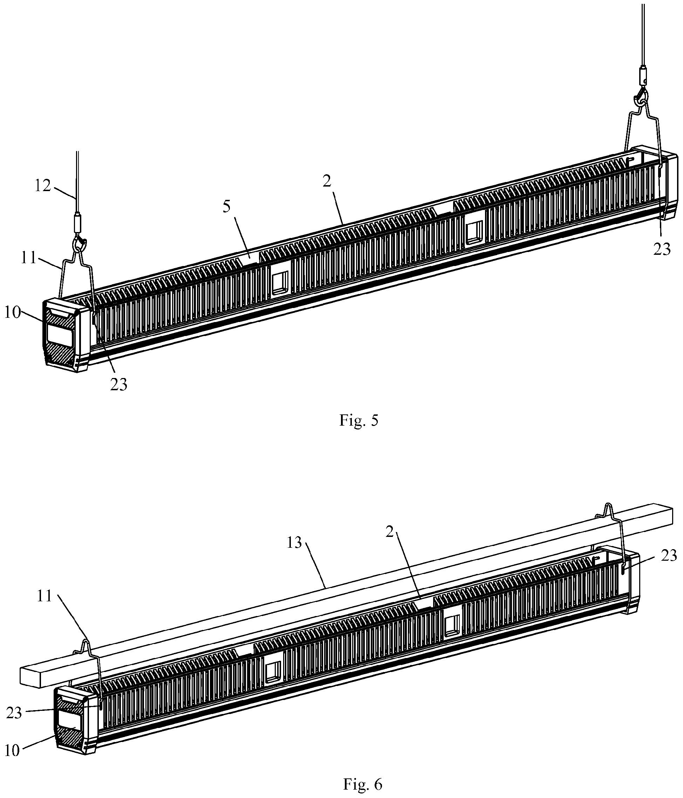

The radiator can be used in lamps, computers, or fans, etc. When the radiator is used in a lamp, the lamp may be a household lamp, a street lamp, or a plant illumination lamp, etc. As shown in Figs. 5 and 7, or Figs. 6 and 7, the plant illumination lamp having an elongated structure extending forward and backward includes a lamp housing, the light source 8 mounted on the lamp housing, the lampshade 9 mounted on a lower end of the lamp housing, end covers 10 mounted on the front and rear ends of the lamp housing, and the radiator as described above. The lampshade 9 may be made of transparent glass. The closed light source cavity 7 is formed by the lamp housing, the lampshade 9, and the two end covers 10. The light source 8 is located in the light source cavity 7, and the light source 8 functions as a heat source of the plant illumination lamp. The radiator is mounted on the upper end of the lamp housing.

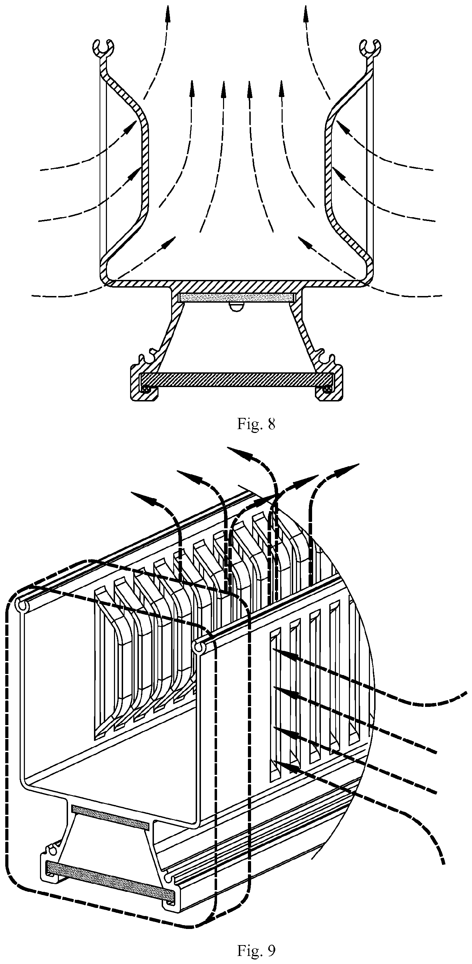

In the radiator and the plant illumination lamp containing the radiator of the present application, when the air in the hot air chamber is heated up, the heat-exchanging through groove 21 forms a heat exchange channel for the internal-and-external temperature difference of the radiator, i.e., forms a heat potential difference. As a result, under the influence of the heat potential difference, the cold air outside the radiator passes through the heat-exchanging through grooves 21 on the heat-radiating side plates 2 to exchange heat with the hot air in the hot air chamber 3 inside the radiator. As shown in Figs. 8-10, the cold air outside the radiator passes through the radiator via the heat-exchanging through groove 21 and flows into the hot air chamber 3 for supplement and exchanging heat with the heat-exchanging through groove 21 on the heat-radiating side plates 2. The air then flows out through the hot air chamber 3 and an air outlet 5 mounted at an upper end of the hot air chamber 3 to form a strong natural air convection. The cold air from the outside is continuously fed, the hot air from the interior is continuously discharged, and the circulation of the air takes away the heat in the hot air chamber 3. Therefore, the heat-exchanging through groove 21 provides a good channel for the cold air entering the radiator, and the convection efficiency of the hot and cold air near the heat-exchanging through groove 21 of the radiator is very high. Thus, the value of the heat exchange coefficient h of the heat-exchanging through groove 21 of the radiator is improved to 4-6 times higher than that of the radiator without heat-exchanging through groove. Moreover, the heat-exchanging through groove increases the effective heat radiation area of the radiator during the processing, and thus increases the amount of heat Q exchanged by the radiator, thereby greatly improving the heat radiation capability of the radiator and meeting the heat radiation requirements of the plant illumination lamp.

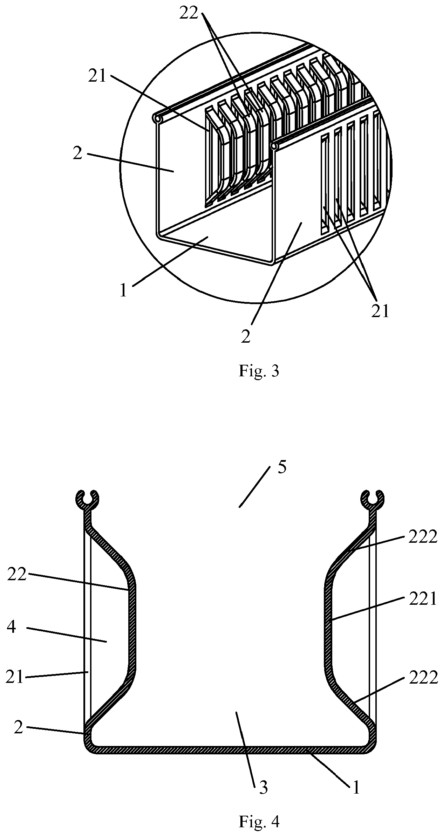

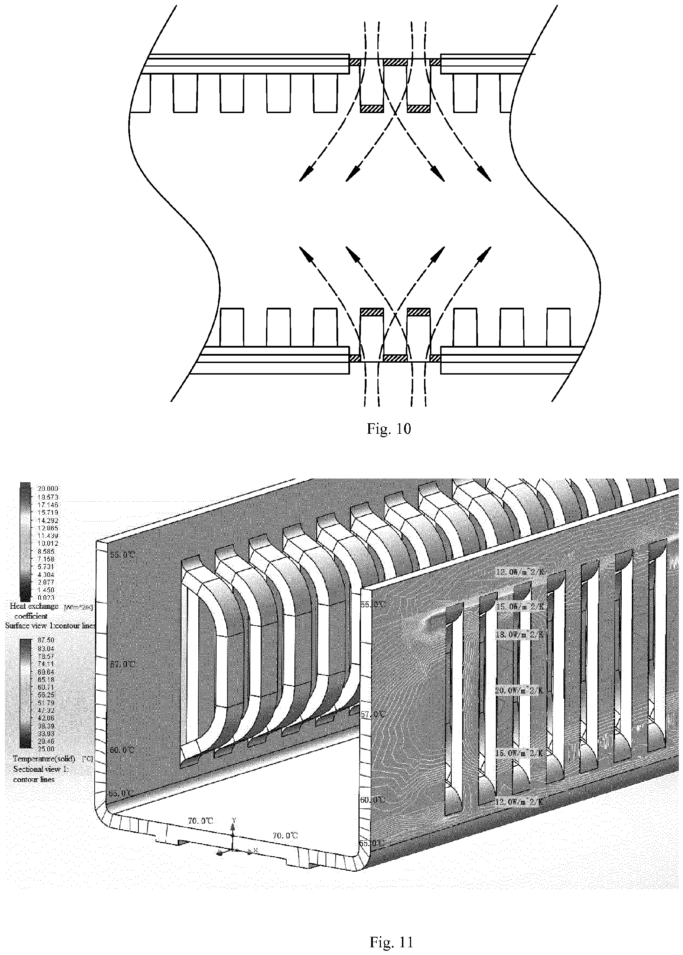

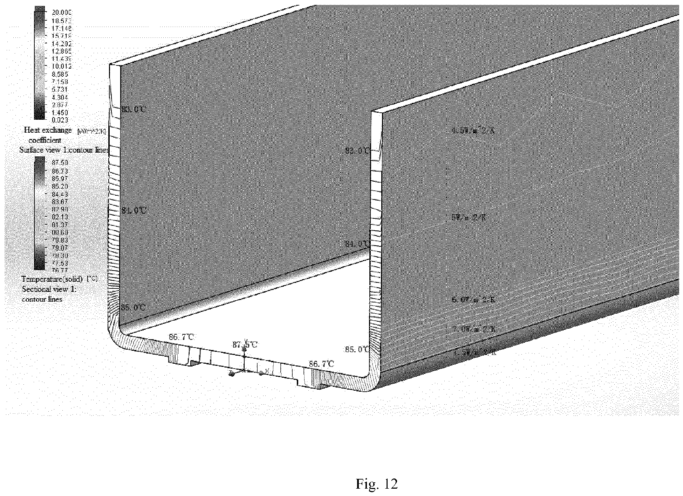

Further, the heat-radiating side plates 2 of the radiator is integrally connected to the heat-radiating baseplate 1 for fixing the light source. The heat-radiating baseplate 1 and the heat-radiating side plates 2 constitute a radiator body having a U-shaped structure. The radiator body can be formed by extrusion or by a bending method, and the length of the radiator body can be cut according to actual demands. As shown in figs. 3 and 4, each heat-radiating side plate is provided with a plurality of heat-radiating fins 22. Each of the heat-radiating fins 22 is a longitudinal elongated structure extending upward and downward. The plurality of heat-radiating fins 22 are equidistantly arranged with a predetermined interval along the length direction of the heat-radiating side plates 2, so the heat-radiating fins 22 can increase the heat radiation surface area of the radiator, which facilitates the heat radiation. The heat-radiating fins 22 are formed on the heat-radiating side plates 2 by a punching method, so that the heat-radiating fins 22 and the heat-radiating side plates 2 form an integral structure. Moreover, after being punched, the heat-radiating side plates 2 each forms torn portions caused by punching and through-groove portions in one-to-one correspondence with the torn portions. The torn portions form the heat-radiating fins 22, and the through-groove portions form the heat-exchanging through grooves 21. Adopting this structure, the following advantages can be obtained. 1. The heat-radiating fins 22 and the radiator body form an integral structure to facilitate the heat conduction, so the heat emitted by the heat source is transmitted to the heat-radiating fins 22 with a minimum thermal resistance along the longitudinal direction. 2. The longitudinal heat-radiating fins 22 are formed by the punching process and the longitudinal heat-exchanging through grooves 21 are in one-to-one correspondence with the longitudinal heat-radiating fins 22. In one aspect, a new heat exchange surface is formed on the offset surface at the heat-exchanging through grooves 21, which increases the heat radiation area without increasing the use of any material, so the material cost and weight of the radiator are not increased. In the other aspect, the longitudinally punched end faces form a heat potential difference through the heat-exchanging through grooves 21, so as to provide a good channel for external cold air to pass through the radiator. The external cold air is driven by the thermal force to flow and circulate in the channel formed by heat-exchanging through grooves 21 in an unimpeded manner, forming a strong natural air convection, and thereby effectively increasing the value of the heat exchange coefficient h of the radiator. The value of the heat exchange coefficient h can be increased to 12, 15 or above. Moreover, the external cold air and the heat-radiating fins 22 have a large contact area, which increases the effective heat radiation area of the radiator, and achieves the heat radiation capability for a higher power with limited materials. More specifically, Fig. 11 shows the comparison of heat exchange coefficient and temperature of the radiator having the heat-exchanging through grooves 21 and the heat-radiating fins 22 in the present application. Fig. 12 shows the comparison of heat exchange coefficient and temperature of a radiator without the heat-exchanging through grooves 21 and the heat-radiating fins 22 in the prior art. Comparing Fig. 11 with Fig. 12, it can be seen that, in the case where the heat sources have the same power and the radiators have the same size, compared with the radiator not provided with the heat-exchanging through grooves 21 and the heat-radiating fins 22, the heat exchange coefficient and temperature of the radiator provided with the heat-exchanging through grooves 21 and the heat-radiating fins 22 are significantly different. In this Embodiment, the power of the heat source is 200 W, and the outer dimension of the radiator is 60 mm width * 50 mm height * 1200 mm length, and the wall thickness of the radiator is 2.5 mm.

Further, when performing the punching process to form the heat-radiating fins 22, the heat-radiating side plates 2 may be punched inwardly to form the heat-radiating fins 22, or the heat-radiating side plates 2 may be punched outwardly to form the heat-radiating fins 22. When the heat-radiating side plates 2 are punched inwardly to form the heat-radiating fins 22, as shown in Figs 3 and 4, the heat-radiating fins 22 protrude inwardly from the heat radiation side plates 2 and are located inside the heat-radiating side plates 2, so the heat-radiating fins 22 are also located at the inner side of the hot air chamber 3. In this case, the heat-exchanging through grooves 21 are formed between the heat-radiating fins 22 and the heat-radiating side plates 2. An inner cavity 4 intercommunicated in front and rear sides that communicates with the hot air chamber 3 is formed between the heat-radiating fins 22 and the heat-radiating side plates 2. The heat-exchanging through grooves 21 communicate with the hot air chamber 3 through the inner cavity 4. The direction of air convection is as follows. As shown in Figs.8-10, the external cold air flows into the hot air cavity 3 after successively passing through the heat-exchanging through grooves 21 and the inner cavity 4 from different directions, and the air after heat exchange flows out from the air outlet 5 at the upper end of the hot air chamber 3, so as to provide a high cooling efficiency. When the heat-radiating side plates 2 are punched outwardly to form the heat-radiating fins 22, the heat-radiating fins 22 protrude outwardly from the heat radiation side plates 2 and are located at the outer side the heat-radiating side plates 2. The heat-exchanging through grooves 21 are formed between the heat-radiating fins 22 and the heat-radiating side plates 2. An outer cavity intercommunicated in front and rear sides that communicates with the outside of the radiator is formed between the heat-radiating fins 22 and the heat-radiating side plates 2. The outer cavity communicates with the hot air chamber 3 through the heat-exchanging through grooves 21. The direction of air convection is as follows. The external cold air flows into the hot air cavity 3 after successively passing through the outer cavity and heat-exchanging through grooves 21 from different directions, and the air after heat exchange flows out from the air outlet 5 at the upper end of the hot air chamber 3, so as to provide a high cooling efficiency. Among the plurality of heat-radiating fins 22 of the heat-radiating side plates 2, the plurality of heat-radiating fins 22 may all protrude inwardly from the heat-radiating side plates 2, may all protrude outwardly from the heat-radiating side plates 2, or may partially protrude inwardly from the heat-radiating side plates 2 and partially protrude outwardly from the heat-radiating side plates 2, simultaneously. In addition, a preferred structure of the heat-radiating fins 22 is described as follows. As shown in Fig. 4, the heat-radiating fins 22 each includes the fin bottom 221 located in a middle and extending straightly, and the fin slanted plate portion 222 extending obliquely from both ends of the fin bottom 221. One end of the fin slanted plate portion 222 away from the fin bottom 221 is connected to the heat-radiating side plates 2. The fin bottom 221 has a flat plate shape, an arc plate shape, or other shape, which can effectively increase the heat radiation surface area of the heat-radiating fins 22 and facilitate the heat radiation.

In order to achieve the effective heat radiation of the radiator, the plant illumination lamp provided with the radiator should be installed in a suspended manner, so that the upper part of the hot air chamber 3 in the radiator is suspended to form an air circulation channel. The suspended installation of the plant illumination lamp can be achieved through mounting slots 23 provided on the heat-radiating side plates 2 and additional hooks 11. Two preferred embodiments are listed below. Embodiment 1: as shown in Fig. 5, the front and rear ends of the heat-radiating side plates 2 are provided with mounting slots 23 intercommunicated in front and rear sides. Two hooks 11 are provided and are respectively connected to the mounting slots 23 at the front and rear ends of the radiator. The upper ends of the hooks 11 are connected to lifting ropes 12, and the lifting ropes 12 can be connected to the ceiling to realize a non-ceiling-mounted installation of the plant illumination lamp. Embodiment 2: as shown in Fig. 6, the front and rear ends of the heat-radiating side plates 2 are provided with mounting slots 23 intercommunicated in front and rear sides. Two hooks 11 are provided and are respectively connected to the mounting slots 23 at the front and rear ends of the radiator. The hooks 11 are hang on the beam 13 or a frame, and there is a space left between the beam 13 and the radiator or between the frame and the radiator to achieve a non-ceiling-mounted installation of the plant illumination lamp. The above two structures make the installation and disassembly of plant illumination lamp very convenient and easy to operate.

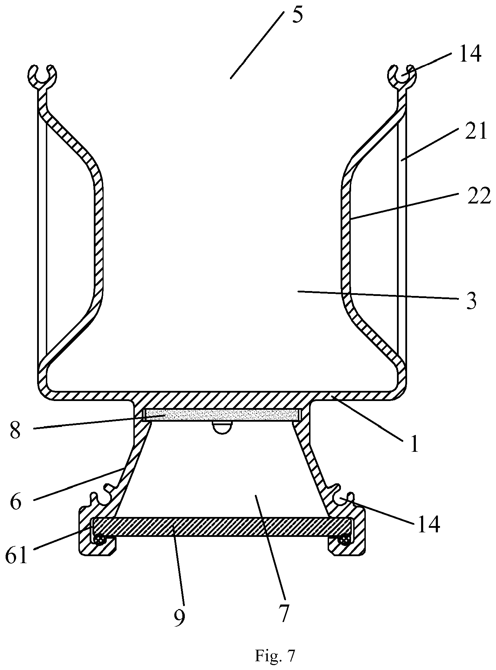

Further, as shown in Fig. 7, the lamp housing and the radiator in the plant illumination lamp form an integral structure. The lamp housing and the radiator share the heat-radiating baseplate 1. The light source 8 is mounted on a lower end surface of the heat-radiating baseplate 1, and the hot air chamber 3 is formed above the upper surface of the heat-radiating baseplate 1, which greatly reduces the thermal resistance and facilitates the heat radiation. A preferred structure of the lamp housing is as follows. The lamp housing is integrally provided with two reflectors 6 arranged symmetrically at the left and right on the heat-radiating baseplate 1, and the two reflectors 6 both extend forward and backward. The inner surface of the reflector 6 is provided with the fixing slot 61, and the left and right edges of the lampshade 9 are respectively fixed in the fixing slots 61 of the two reflectors 6, thereby realizing the connection between the lampshade 9 and the lamp housing. In addition, a seal ring mounted in the fixing slot 61 is provided between the lampshade 9 and the reflector 6 for waterproofing. A mounting cavity intercommunicated in front and rear sides is formed among the heat-radiating baseplate 1, the reflector 6, and the lampshade 9. The two end covers 10 respectively seal and block the front and rear ends of the mounting cavity to form the closed light source cavity 7. The end covers 10 are fixed on the heat-radiating side plate 2 and the reflector 6 by screws, so the upper end of the heat-radiating side plate 2 and the outer end of the reflector 6 are provided with threaded holes 14 extending forward and backward. The components integrally formed by the radiator and the lamp housing are extruded aluminum profiles or bent plates, which can realize a complicated mounting structure on a single piece of radiator 12, so as to reduce the problems of large thermal resistance and high failure risk caused by multi-part assembly. Therefore, the products have the advantages of better strength, lighter piece weight, and lower cost.

In summary, according to the radiator of the present application, the extruded aluminum profiles are subjected to the process of punching to form the heat-radiating fins 22 and the heat-exchanging through grooves 21, which can greatly increase the value of the heat exchange coefficient h and the effective heat-radiating area, using a small amount of material without increasing the material cost and product weight, thereby greatly improving the heat-radiating capability of the radiator.

Therefore, the present invention effectively overcomes various drawbacks in the prior art and has high industrial utilization value.

The above-described embodiments merely exemplify the principles and functions of the present invention and are not intended to limit the present invention. Various modifications or variations of the above-described embodiments may be made by those skilled in the art without departing from the scope of the present invention, which is covered by the appended claims.

## Claims

1. A radiator for a lamp, comprising a heat-radiating baseplate (1) configured for fixing a heat source, and heat-radiating side plates (2) connected to the heat-radiating baseplate (1), wherein each of the heat-radiating side plates (2) is provided with a plurality of heat-exchanging through grooves (21) running through the heat-radiating side plates (2);
wherein the heat-radiating side plates (2) are arranged on two sides of the heat-radiating baseplate (1); and each of the heat-radiating side plates (2) is provided with a plurality of heat-radiating fins (22) ;
wherein the heat-radiating fins (22) are integrally formed on the heat-radiating side plates (2) by a punching method, and after being punched, the heat-radiating side plates (2) are configured with torn portions caused by punching and through-groove portions in a one-to-one correspondence with the torn portions; and the torn portions form the heat-radiating fins (22), and the through-groove portions form the heat-exchanging through grooves (21); and **characterized in that** the heat-radiating baseplate is integrally provided with two reflectors (6) arranged symmetrically at the left and right of the heat-radiating baseplate (1) and the two reflectors (6) both extend forward and backward; and the heat-radiating baseplate (1) and the two reflectors (6) constitute a lamp housing of the lamp and form a light source cavity (7) for the lamp; an inner surface of each of the two reflectors (6) is provided with a fixing slot (61) configured to fix a lamp shade.

2. The radiator according to claim 1, **characterized in that**, among the plurality of heat-radiating fins (22), a part of the heat-radiating fins (22) protrude inwardly from the heat-radiating side plates (2), and another part of the heat-radiating fins (22) protrude outwardly from the heat-radiating side plates (2).

3. The radiator according to any one of claims 1 or 2, **characterized in that**, each of the heat-radiating fins (22) comprises a fin bottom (221) located in a middle and extending straightly, and a fin slanted plate portion (222) extending obliquely from both ends of the fin bottom (221); one end of the fin slanted plate portion (222) away from the fin bottom (221) is connected to the heat-radiating side plates (2); and the fin bottom (221) is in a flat plate shape or an arc plate shape.

4. The radiator according to claim 1, **characterized in that**, the heat-radiating side plates (2) are integrally connected to the heat-radiating baseplate (1), and the radiator is an extruded aluminum profile or a bent plate.

5. A plant illumination lamp, comprising a lamp housing having a light source cavity (7), a light source (8) mounted in the lamp housing and located in the light source cavity (7), **characterized in that**, the plant illumination lamp further comprises the radiator of claim 1, and the radiator is mounted at an upper end of the lamp housing.

6. The plant illumination lamp according to claim 5, **characterized in that**, the lamp housing and the radiator are in an integral structure; the lamp housing and the radiator share the heat-radiating baseplate (1); and the light source (8) is mounted on the heat-radiating baseplate (1).

## Patentansprüche

1. Heizkörper für eine Lampe,
umfassend eine wärmeabstrahlende Grundplatte (1), die zur Befestigung einer Wärmequelle konfiguriert ist, und wärmeabstrahlende Seitenplatten (2), die mit der wärmeabstrahlenden Grundplatte (1) verbunden sind,
wobei jede der wärmeabstrahlenden Seitenplatten (2) mit einer Vielzahl von wärmetauschenden Durchgangsnuten (21) vorgesehen ist, die durch die wärmeabstrahlenden Seitenplatten (2) verlaufen;
wobei die wärmeabstrahlenden Seitenplatten (2) auf zwei Seiten der wärmeabstrahlenden Grundplatte (1) angeordnet sind; und jede der wärmeabstrahlenden Seitenplatten (2) mit einer Vielzahl von wärmeabstrahlenden Rippen (22) vorgesehen ist;
wobei die wärmeabstrahlenden Rippen (22) durch ein Stanzverfahren einstückig an den wärmeabstrahlenden Seitenplatten (2) gebildet sind, und nach dem Stanzen werden die wärmeabstrahlenden Seitenplatten (2) mit durch das Stanzen verursachten gerissenen Teilen und Durchgangsnutteilen in einer Eins-zu-Eins-Korrespondenz mit den gerissenen Teilen konfiguriert;
und die gerissenen Teile die wärmeabstrahlenden Rippen (22) bilden und die Durchgangsnutteile die wärmetauschenden Durchgangsnuten (21) bilden; und **dadurch gekennzeichnet, dass** die wärmeabstrahlende Grundplatte einstückig mit zwei Reflektoren (6) vorgesehen ist, die symmetrisch links und rechts von der wärmeabstrahlenden Grundplatte (1) angeordnet sind und sich die beiden Reflektoren (6) sowohl nach vorne als auch nach hinten erstrecken; und die wärmeabstrahlende Grundplatte (1) und die zwei Reflektoren (6) ein Lampengehäuse der Lampe bilden und einen Lichtquellenhohlraum (7) für die Lampe bilden; eine Innenfläche von jedem der beiden Reflektoren (6) mit einem Befestigungsschlitz (61) vorgesehen ist, der konfiguriert ist, um einen Lampenschirm zu befestigen.

2. Heizkörper nach Anspruch 1, **dadurch gekennzeichnet, dass** unter der Vielzahl von wärmeabstrahlenden Rippen (22), ein Teil der wärmeabstrahlenden Rippen (22) von den wärmeabstrahlenden Seitenplatten (2) nach innen herausragt und ein anderer Teil der wärmeabstrahlenden Rippen (22) von den wärmeabstrahlenden Seitenplatten (2) nach außen herausragt.

3. Heizkörper nach irgendeinem der Ansprüche 1 oder 2, **dadurch gekennzeichnet, dass** jede der wärmeabstrahlenden Rippen (22) einen Rippenboden (221), der in einer Mitte lokalisiert ist und sich gerade erstreckt, und einen schrägen Rippenplattenteil (222), der sich schräg von beiden Enden des Rippenbodens (221) erstreckt, umfasst; ein von dem Rippenboden (221) entferntes Ende des schrägen Rippenplattenteils (222) mit den wärmeabstrahlenden Seitenplatten (2) verbunden ist; und der Rippenboden (221) ist in einer Flachplatte-Form oder einer Bogenplatte-Form.

4. Heizkörper nach Anspruch 1, **dadurch gekennzeichnet, dass** die wärmeabstrahlenden Seitenplatten (2) einstückig mit der wärmeabstrahlenden Grundplatte (1) verbunden sind und der Heizkörper ein extrudiertes Aluminiumprofil oder eine gebogene Platte ist.

5. Pflanzenbeleuchtungslampe, umfassend ein Lampengehäuse mit einem Lichtquellenhohlraum (7), eine Lichtquelle (8), die in dem Lampengehäuse montiert und in dem Lichtquellenhohlraum (7) lokalisiert ist, **dadurch gekennzeichnet, dass** die Pflanzenbeleuchtungslampe ferner den Heizkörper nach Anspruch 1 umfasst, und der Heizkörper an einem oberen Ende des Lampengehäuses montiert ist.

6. Pflanzenbeleuchtungslampe nach Anspruch 5, **dadurch gekennzeichnet, dass** das Lampengehäuse und der Heizkörper in einer einstückigen Struktur sind; das Lampengehäuse und der Heizkörper sich die wärmeabstrahlende Grundplatte (1) teilen; und die Lichtquelle (8) am wärmeabstrahlenden Grundplatte (1) montiert ist.

## Revendications

1. Radiateur pour une lampe, comprenant une plaque de base de rayonnement thermique (1) configurée pour fixer une source de chaleur, et des plaques latérales de rayonnement thermique (2) connectées à la plaque de base de rayonnement thermique (1), dans lequel chacune des plaques latérales de rayonnement de chaleur (2) est pourvue d'une pluralité de rainures traversantes d'échange de chaleur (21) s'étendant à travers les plaques latérales de rayonnement thermique (2) ;
dans lequel les plaques latérales de rayonnement thermique (2) sont disposées sur deux côtés de la plaque de base de rayonnement thermique (1) ; et chacune des plaques latérales de rayonnement thermique (2) est pourvue d'une pluralité d'ailettes de rayonnement thermique (22) ;
dans lequel les ailettes de rayonnement thermique (22) sont formées intégralement sur les plaques latérales de rayonnement thermique (2) par un procédé de poinçonnage, et après avoir été poinçonnées, les plaques latérales de rayonnement thermique (2) sont configurées avec des parties déchirées causées par le poinçonnage et des parties de rainures traversantes en correspondance un à un avec les parties déchirées ; et les parties déchirées forment les ailettes de rayonnement thermique (22), et les parties de rainures traversantes forment les rainures traversantes d'échange de chaleur (21) ; et
**caractérisé en ce que** la plaque de base de rayonnement thermique est pourvue d'un seul tenant de deux réflecteurs (6) disposés symétriquement à gauche et à droite de la plaque de base de rayonnement thermique (1) et les deux réflecteurs (6) s'étendent tous deux vers l'avant et vers l'arrière ; et la plaque de base de rayonnement thermique (1) et les deux réflecteurs (6) constituent un boîtier de lampe de la lampe et forment une cavité de source lumineuse (7) pour la lampe ; une surface intérieure de chacun des deux réflecteurs (6) est pourvue d'une fente de fixation (61) configurée pour fixer un abat-jour.

2. Radiateur selon la revendication 1, **caractérisé en ce que**, parmi la pluralité d'ailettes de rayonnement thermique (22), une partie des ailettes de rayonnement thermique (22) fait saillie vers l'intérieur des plaques latérales de rayonnement thermique (2), et une autre partie des ailettes de rayonnement thermique (22) fait saillie vers l'extérieur des plaques latérales de rayonnement thermique (2).

3. Radiateur selon l'une quelconque des revendications 1 ou 2, **caractérisé en ce que**, chacune des ailettes de rayonnement thermique (22) comprend un fond d'ailette (221) situé au milieu et s'étendant de manière rectiligne, et une partie de plaque inclinée d'ailette (222) s'étendant de manière oblique depuis les deux extrémités du fond d'ailette (221) ; une extrémité de la partie de plaque inclinée d'ailette (222) éloignée du fond d'ailette (221) est connectée aux plaques latérales de rayonnement thermique (2) ; et le fond d'ailette (221) a la forme d'une plaque plate ou d'une plaque en arc.

4. Radiateur selon la revendication 1, **caractérisé en ce que**, les plaques latérales de rayonnement thermique (2) sont connectées intégralement à la plaque de base de rayonnement thermique (1), et le radiateur est un profilé en aluminium extrudé ou une plaque pliée.

5. Lampe d'éclairage de plantes, comprenant un boîtier de lampe ayant une cavité de source de lumière (7), une source de lumière (8) montée dans le boîtier de lampe et située dans la cavité de source de lumière (7), **caractérisée en ce que**, la lampe d'éclairage des plantes comprend en outre le radiateur de la revendication 1, et le radiateur est monté à une extrémité supérieure du boîtier de la lampe.

6. Lampe d'éclairage de plantes selon la revendication 5, **caractérisée en ce que**, le boîtier de lampe et le radiateur sont dans une structure intégrale ; le boîtier de lampe et le radiateur partagent la plaque de base de rayonnement thermique (1) ; et la source de lumière (8) est montée sur la plaque de base de rayonnement thermique (1).
